Europäisches Patentamt

European Patent Office

Office européen des brevets

(11) Veröffentlichungsnummer: **0 290 671**
**A2**

## (12) EUROPÄISCHE PATENTANMELDUNG

(21) Anmeldenummer: 87116383.8

(22) Anmeldetag: 06.11.87

(51) Int. Cl.⁴: **F16J 15/34**

(30) Priorität: 08.05.87 DE 3715386

(43) Veröffentlichungstag der Anmeldung:
17.11.88 Patentblatt 88/46

(84) Benannte Vertragsstaaten:
**AT BE CH DE ES FR GB GR IT LI LU NL SE**

(71) Anmelder: **Firma Carl Freudenberg**
**Höhnerweg 2-4**
**D-6940 Weinheim/Bergstrasse(DE)**

(72) Erfinder: **Kraus, Reinhold**
**Hoffeldstrasse 8**
**D-6942 Mörlenbach(DE)**

(74) Vertreter: **Weissenfeld-Richters, Helga, Dr.**
**Höhnerweg 2-4**
**D-6940 Weinheim/Bergstrasse(DE)**

(54) Gleitringdichtung.

(57) Eine Gleitringdichtung für eine Welle mit einer vorgegebenen Drehrichtung. Für die axiale Anpressung des Gleitringes (3) an den zugehörigen Gegenring ist eine die Welle umschließende, auf Druck beanspruchbare Wendelfeder (5) vorgesehen. Diese ist entgegen der Drehrichtung der Welle (1) gewendelt und liegt dadurch unter einer sich durch das übertragene Drehmoment erhöhenden, radialen Anpressung an den Gegenflächen einerseits der Welle (1) und andererseits des Gleitringes (3) an.

Fig. 1

EP 0 290 671 A2

## Gleitringdichtung

Die Erfindung betrifft eine Gleitringdichtung nach dem Oberbegriff von Anspruch 1.

Eine solche Gleitringdichtung ist aus der DE-PS 34 12 594 bekannt. Für die axiale Anpressung des Gleitringes an den Gegenring ist dabei eine auf Druck beanspruchbare Wendelfeder vorgesehen, deren eines Ende an einem in radialer Richtung vorspringenden Ringbund der Welle abgestützt ist und die die gegenüberliegende, freie Stirnfläche des Gleitringes mit wenigstens einer Federwindung berührt. Die Wendelfeder dient zugleich der Übertragung des betriebsnotwendigen Drehmomentes von der Welle auf den Gleitring. Ihre beiden Enden sind zur Erreichung diesen Zweckes reibschlüssig auf den Flächen einerseits der Welle und andererseits des Gleitringes festgelegt.

Der Erfindung liegt die Aufgabe zugrunde, eine solche Gleitringdichtung derart weiterzuentwickeln, daß sich bei einem vereinfachten Aufbau eine völlig ausgeglichene Anpressung des Gleitringes an den Gegenring über unbegrenzte Zeiträume ergibt. Darüberhinaus soll die erfindungsgemäße Gleitringdichtung besonders einfach montierbar sein.

Diese Aufgabe wird erfindungsgemäß mit den kennzeichnen Merkmalen von Anspruch 1 gelöst. Auf vorteilhafte Ausgestaltungen nehmen die Unteransprüche bezug.

Die Wendelfeder der erfindungsgemäßen Gleitringdichtung ist entgegen der Drehrichtung der abzudichtenden Welle gewendelt, was dazu führt, daß sich die Enden unter der Wirkung des betriebsbedingt zu übertragenden Drehmomentes noch fester an die jeweils zugeordneten Gegenflächen anschmieden als im Einbauzustand oder bei nichtdrehender Welle.

Das betriebsnotwendige Drehmoment kann daher bereits bei minimaler Initialanpressung der Wendelfeder an die ihnen zugeordneten Gegenflächen sicher übertragen werden, d.h. bei einem merklich reduzierten Übermaß der Innendurchmesser der Wendelfeder im Bereich der beiderseitigen Enden, bezogen auf die Außendurchmesser einerseits der Welle und andererseits des Gleitringes in den jeweils zugeordneten Abschnitten. Die Montage der erfindungsgemäßen Gleitringdichtung erfährt dadurch eine deutliche Vereinfachung. Dennoch wird das betriebsnotwendige Drehmoment unabhängig von der Gebrauchsdauer stets sicher übertragen.

Daneben resultiert der weitere Vorteil einer relativ weicheren Abstützung des Gleitringes auf der abzudichtenden Welle in axialer Richtung. Die Anpressung des Gleitringes an den Gegenring erfährt dadurch in Umfangsrichtung eine deutliche Vergleichmäßigung, welche das Abdichtungsergebnis verbessert und den Verschleiß reduziert.

Die Wendelfeder kann im Bereich des den Gleitring umschließenden Endes an einem im wesentlichen in radialer Richtung vorspringenden Bund des Gleitringes axial abgestützt sein. Der Hauptzweck dieser Ausbildung ist darauf gerichtet, die Außenkontur der gewöhnlich die Wendelfeder, den Gleitring und die Dichtung umfassenden Einbaueinheit zu vergleichmäßigen. Die Montage der Einbaueinheit insbesondere unter Verwendung automatischer Hilfseinrichtung erfährt dadurch eine Vereinfachung. Des weiteren ergibt sich eine gewisse Vergrößerung der aktiv zur Verfügung stehenden Kühlflächen, welche durch die betriebsbedingte Drehbewegung der Wendelfeder um ihre Achse von dem abgedichteten Medium überspült werden. Auch dieser Effekt hat eine Reduzierung des betriebsbedingten Verschleißes zur Folge.

Die Wendelfeder kann auch mit einer hakenartigen Umbiegung des Endes ihrer letzten Windung in sich senkrecht zur Umfangsrichtung erstreckenden Ausnehmungen des Gleitringes oder eines gegebenenfalls an diesem vorhandenen, in radialer Richtung nach außen vorstehenden Bundes eingreifen. Die erforderliche Initialanpressung für die Übertragung des betriebsnotwendigen Drehmomentes läßt sich in diesem Falle noch weiter reduzieren und damit das erforderliche Übermaß der Innendurchmesser der Wendelfeder im Bereich ihrer Enden, bezogen auf die jeweiligen Durchmesser einerseits der Welle und andererseits des Gleitringes im Bereich der jeweils zugeordneten Abschnitte.

Die Wendelfeder kann auch im Bereich wenigstens eines ihrer Enden in sich parallel zu ihren Windungen erstreckende Gewindegänge der jeweiligen Gegenfläche des Gleitringes und/oder der Welle eingreifen. Die Gewindegänge können bei Verwendung einer Wendelfeder, deren Windungen ein kreisförmig begrenztes Profil haben, in axialer Richtung beiderseits durch miteinander konvergierende Kegelflächen begrenzt sein. Eine reibschlüssige Verbindung zwischen beiden bei minimaler Initialanpressung ergibt sich in diesem Falle insbesondere dann, wenn die einander gegenüberliegenden Kegelflächen miteinander einen Winkel von etwa 45 bis 90° einschließen, vorzugsweise einen solchen von 55 bis 65°.

Ein ähnlicher Effekt läßt sich erzielen mit deutlich reduziertem Außendurchmesser, wenn die Gewindegänge in ihrem Querschnitt an das Profil des Wendels der Wendelfeder angepaßt sind. In diesem Falle resultiert eine Vergrößerung der gegenseitigen Berührungsfläche, was ebenfalls eine Absenkung der für die Übertragung eines bestimmten Drehmomentes erforderlichen Initialanpressung zwischen den einander gegenüberliegenden Teilen erlaubt.

Der Gleitring der erfindungsgemäßen Gleitringdichtung ist zweckmäßig durch einen in radialer Richtung elastisch zusammengepreßten Dichtring gegenüber der Welle abgedichtet. Die für den Verschleißausgleich des Gleitringes erforderliche, axiale Relativbeweglichkeit des Gleitringes in bezug auf die Welle ist in diesem Falle aureichend gewährleistet, insbesondere wenn der Dichtring ein kreisförmig begrenztes Profil aufweist. Er ist zweckmäßig auf der druckabgewandten Seite an einem nach innen vorspringenden Ringbund des Gleitringes abgestützt, was zugleich unerwünschte und das Abichtungsergebnis gefährdende Relativverlagerungen verhindert. Auch kann der Gleitring auf der dem abgedichteten Raum zugewandten Seite des Dichtringes einen weiteren, nach innen vorspringenden Ringbund aufweisen. Auch in dieser Richtung vermag der Dichtring daher unter normalen Betriebsbedingungen seine Lage nicht in störender Weise zu verändern. Des weiteren resultiert der Vorteil, daß der Dichtring auch im uneingebauten Zustand der den Dichtring, die Wendelfeder und den Gleitring umfassenden Einbaueinheit seine Lage nicht in nachteiliger Weise zu verändern vermag. Unter Vermeidung aufwendiger Kontrollen ist daher eine unmittelbare Verwendung der Einbaueinheit möglich.

Die Erfindung wird nachfolgend anhand der als Anlage beigefügten Zeichnung weiter verdeutlicht. Es zeigen:

Figur 1 eine Gleitringdichtung der erfindungsgemäßen Art in verwendungsfähigem Zustand,

Figuren 2 und 3 zwei spezielle Ausführungen von Gleitringen, Wendelfedern und Dichtungen in halbgeschnittener Darstellung und in einem auf einer Welle montierten Zustand.

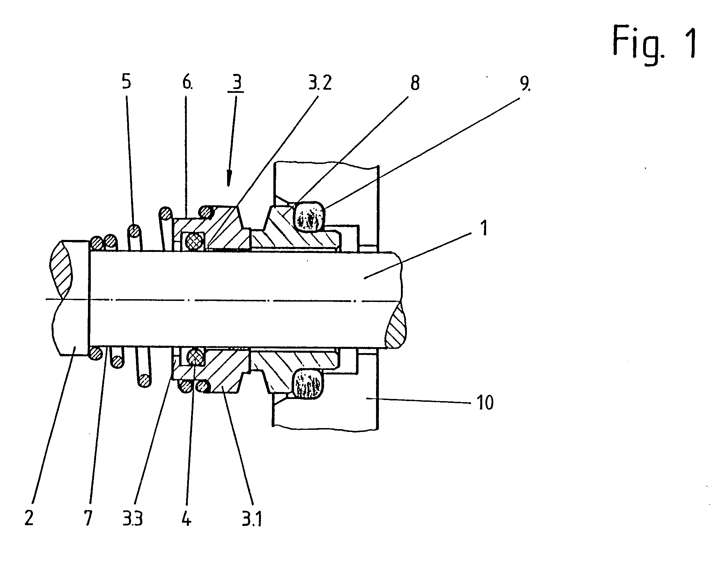

Die in Figur 1 gezeigte Gleitringdichtung dient der Abdichtung einer sich unter normalen Betriebsbedingungen in einer Drehbewegung befindlichen Welle 1 gegenüber einem die Welle in einem radialen Abstand ruhend umschließenden Gehäuses 10. Die Gleitringdichtung umfaßt im wesentlichen einen Gleitring 3, der flüssigkeitsdicht und statisch ruhend auf der Welle 1 gelagert ist und dessen Stirnfläche unter einer elastischen Vorspannung an der ihm zugeordneten Stirnfläche eines Gegenringes 8 anliegt, welcher durch den O-Ring 9 verdrehsicher und flüssigkeitsdicht in dem abzudichtenden Gehäuse 10 gelagert ist.

Die Anpressung des Gleitringes 3 and den Gegenring 8 wird durch die entgegen der Drehrichtung der Welle 1 gewendelte Wendelfeder 5 bewirkt, deren beiderseitige Enden unter einer radialen Vorspannung einerseits an der Umfangsfläche der Welle 7 und andererseits an der Umfangsfläche 6 des Gleitringes 3 angepreßt sind. Für die statische Abdichtung des Gleitringes 3 gegenüber der sich in einer Drehbewegung befindlichen Welle 1 ist eine O-Ring-Dichtung 4 vorgesehen, welche aus gummielastischem Werkstoff besteht und welche um Einbauzustand in radialer Richtung elastisch zusammengepreßt ist zwischen den einander gegenüberliegenden Flächen der Welle 1 und des Gleitringes 3.

Die O-Ring-Dichtung 4 liegt auf der druckabgewandten Seite an einem in radialer Richtung nach innen weisenden Ringvorsprung 3.2 des Gleitringes 3 an. Der Druck des abzudichtenden Mediums vermag dadurch eine die Betriebssicherheit beeinträchtigende Relativverlagerung der O-Ring-Dichtung 4 in Richtung der druckabgewandten Seite nicht zu bewirken.

Auf der dem abgedichteten Raum zugewandten Seite ist ein weiterer, in radialer Richtung nach innen weisender Ringvorsprung 3.3 des Gleitringes 3 vorhanden.

Dieser dient in erster Linie der verliersicheren Festlegung der O-Ring-Dichtung 4 in den Gleitring 3, wenn diese noch nicht montiert sind. Die Einbringung der O-Ring-Dichtung 4 in die durch die beiden Ringvorsprünge 3.1 und 3.3 in axialer Richtung begrenzte Nut erfolgt vor der Montage durch einfaches Einschnappenlassen.

Durch die Verwendung einer Wendelfeder 5, die entgegen der Drehrichtung der abzudichtenden Welle 1 gewendelt ist, ergibt sich während der betriebsbedingten Übertragung eines Drehmomentes eine Erhöhung der Anpressung der beiderseitigen Enden der Wendelfeder an die Außenflächen 6,7 einerseits des Gleitringes 3 und andererseits der abzudichtenden Welle 1. Die Erhöhung entspricht quantitativ der Größe des zu übetragenden Drehmoments, wodurch eine gute elastische Nachgiebigkeit der Wendelfeder 5 weiterhin gewährleistet ist. Die in axialer Richtung auf den Gleitring 3 ausgeübte Kraft ist dadurch auf dem gesamten Umfang ausgeglichen, was bei minimalem Verschleiß ein optimales Abdichtungsergebnis im Dichtspalt gegenüber dem Gleitring 8 gewährleistet.

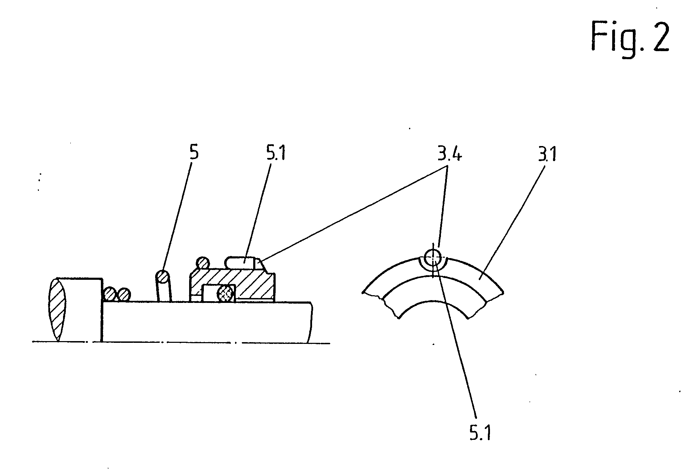

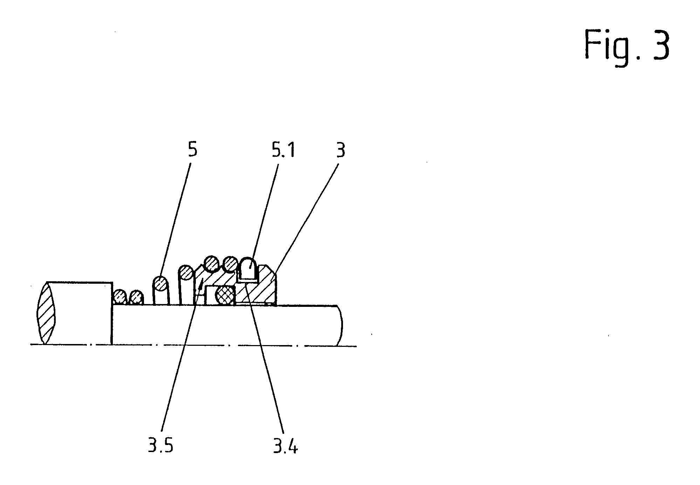

Die Gleitringe nach den Figuren 2 und 3 entsprechenden funktionell und ihrem Aufbau weitgehend der vorstehend beschriebenen Ausführung. In beiden Fällen ist jedoch das Ende des die Wendelfeder 5 bildenden Wendels mit einer hakenartigen Umbiegung 5.1 versehen, welche in eine sich senkrecht zur Umfangsrichtung erstreckende Ausnehmung 3.4 des Gleitringes 3 bzw. des an diesem vorgesehenen Bundes 3.1 eingreift. Die hakenartige Umbiegung und die Ausnehmung haben bei der Ausführung nach Figur 2 eine axiale Erstreckung, bei der Ausführung nach Figur 3 eine radiale Erstreckung. Zusätzlich ist die Wendelfeder 5 bei der Ausführung nach Figur 3 im Bereich des den Gleitring 3 berührenden Endes in Gewindegängen 3.5 der Gegenfläche gelagert, welche sich parallel zu ihren Windungen erstrecken.

Die Gewindegänge 3.5 sind dabei dem Profil des Wendels der Wendelfeder 5 in ihrem Querschnitt angepaßt, wodurch sich eine Vergrößerung der gegenseitigen Berührungsfläche ergibt.

## Ansprüche

1. Gleitringdichtung, umfassend eine Welle mit einer vorgegebenen Drehrichtung und mit einem Wellenbund, einen die Welle umschließenden Gleitring, ein Dichtelement zwischen der Welle und dem Gleitring sowie eine die Welle umschließende, auf Bruch beanspruchbare Wendelfeder, deren beide Enden einerseits die Welle im Bereich des Wellenbundes und andererseits den Gleitring im Bereich einer Umfangsfläche unter einer radialen Vorspannung umschließen, dadurch gekennzeichnet, daß die Wendelfeder (5) entgegen der Drehrichtung der Welle (1) gewendelt ist.

2. Gleitringdichtung nach Anspruch 1, dadurch gekennzeichnet, daß die Wendelfeder (5) im Bereich des den Gleitring (3) umschließenden Endes an einem sich im wesentlichen in radialer Richtung vorspringenden Bund (3.1) des Gleitringes (3) axial abgestützt ist.

3. Gleitringdichtung nach Anspruch 2, dadurch gekennzeichnet, daß die Wendelfeder (5) mit einer hakenartigen Umbiegung (5.1) des Endes ihrer letzten Windung in eine sich senkrecht zur Umfangsrichtung erstreckende Ausnehmung (3.4) des Gleitringes (3) oder des Bundes (3.1) eingreift.

4. Gleitringdichtung nach einem der Ansprüche 1 bis 3, dadurch gekennzeichnet, daß die Wendelfeder (5) im Bereich wenigstens eines ihrer Enden in sich parallel zu ihren Windungen erstreckenden Gewindegängen (3.5) der Gegenflächen (6, 7) gelagert ist.

5. Gleitringdichtung nach Anspruch 4, dadurch gekennzeichnet, daß die Gewindegänge einem dem Profil der Windungen der Wendelfeder (5) angepaßten Querschnitt haben.

6. Gleitringdichtung nach einem der Ansprüche 1 bis 5, dadurch gekennzeichnet, daß der Gleitring (3) durch einen in radialer Richtung elastisch zusammengepreßten Dichtring (4) aus Gummi gegenüber der Welle (1) abgedichtet ist.

7. Gleitringdichtung nach Anspruch 6, dadurch gekennzeichnet, daß der Dichtring (4) ein kreisförmig begrenztes Profil aufweist und auf der druckabgewandten Seite an einem nach innen vorspringenden Ringbund (3.2) des Gleitringes anliegt.

8. Gleitringdichtung nach Anspruch 7, dadurch gekennzeichnet, daß der Gleitring (3) auf der dem abgedichteten Raum zugewandten Seite der Dichtung (4) einen weiteren, nach innen vorspringenden Ringbund (3.3) aufweist.

Fig. 1

0 290 671

Fig. 2

0 290 671

Fig. 3

0 290 671